# EUROPEAN PATENT APPLICATION

(11) **EP 4 620 815 A1**
(43) Date of publication of application: **24.09.2025**
(21) Application number: 24164267.7
(22) Date of filing: 18.03.2024
(51) Int. Cl.: B64D 11/04

(54) **TABLE**

(71) Applicant: B/E Aerospace, Inc., Winston-Salem, NC 27105 (US)
(72) Inventor: CUNANAN, Jeriel Binas, Tanauan City, 4232 (PH); RUNAS, Oliver Bumatay, Tanauan City, 4232 (PH)
(74) Representative: Dehns

(57) **Abstract**

An expanding pull-out table (100) for an aircraft galley (10), comprising: a primary table (120); and a secondary table (140) actuable relative to the primary table; wherein the expanding pull-out table is reconfigurable, by translation of the primary table (120), between a first configuration in which the secondary table (140) is stowed, and a second configuration in which the secondary table is deployed from the primary table.

## Description

The present invention relates to an expanding pull-out table for an aircraft galley, and a method of reconfiguring an expanding pull-out table.

Aircraft provide a unique working environment for the preparation of food and beverages (amongst other things), when compared to food and beverage preparation environments in buildings and even other forms of transport.

For example, available working space, such as that in the galley of an aircraft, is typically highly restricted due to the inherent size and weight restrictions of aircraft. Further, turbulence can occur unexpectedly and even minor turbulence can make food and beverage preparation more challenging.

These limitations increase the probability of hazards in the managing of food and beverages including, for example, the risk of spills, burns and items falling to the floor of the aircraft during in flight operations. These hazards have the potential to jeopardize the safety of the cabin crew and passengers as well as the potential to lead to damage to interior parts of the aircraft.

A need therefore exists for a means of improving the working environment for the preparation of food and beverages on board aircraft.

Viewed from a first aspect, there is provided an expanding pull-out table for an aircraft galley comprising: a primary table; and a secondary table actuable relative to the primary table; wherein the expanding pull-out table is reconfigurable, by translation of the primary table, between a first configuration in which the secondary table is stowed, and a secondary configuration in which the secondary table is deployed from the primary table.

Optionally, the expanding pull-out table is translatable along a first axis and comprises a deployment mechanism configured to translate the secondary table in the direction of a second axis proportional to translation of the primary table along the first axis.

Optionally, the deployment mechanism is configured to translate the secondary table in the direction of the second axis responsive to the primary table translating a predetermined distance along the first axis.

Optionally, the deployment mechanism comprises a rack and pinion assembly arranged to deploy the secondary table by an amount proportional to translation of the primary table.

Optionally, the deployment mechanism is configured to retract the secondary table to reconfigure the expanding pull-out table from the second configuration to the first configuration proportional to translation of the primary table along the first axis.

Optionally, the expanding pull-out table comprises a damper wheel configured to dampen vibrations of the primary table and secondary table.

Optionally, the damper wheel is housed within the primary table and portions of the damper wheel protrude through openings in upper and lower surfaces of the primary table.

Optionally, the damper wheel is at least partially formed of a rubber material.

Optionally, the damper wheel comprises a through hole spaced from the rotational axis for dampening.

Optionally, the expanding pull-out table comprises a plurality of damper wheels.

Viewed from a second aspect of the invention an aircraft galley is provided comprising the expanding pull-out table of the first aspect and optionally including any of the optional features of the first aspect.

Optionally, the aircraft galley comprises a work station having a recess, wherein the expanding pull-out table is installed in the recess such that in a first configuration the expanding pull-out table is housed within the recess and in a second configuration the expanding pull-out table protrudes from the recess.

Optionally, the recess is a first recess and the expanding pull-out table is a first expanding pull-out table; the work station comprises a second recess; the aircraft galley comprises a second expanding pull-out table of the first aspect, optionally including any of the optional features of the first aspect, installed in the second recess, and the first and second expanding pull-out tables are arranged such that the respective secondary tables extend in opposite directions.

Viewed from a third aspect of the invention an aircraft comprising the expanding pull-out table according to the first aspect, optionally including any of the optional features of the first aspect, and/or the aircraft galley according to the second aspect, optionally including any of the optional features of the second aspect, is provided.

Viewed from a fourth aspect of the invention a method of reconfiguring an expanding pull-out table for an aircraft galley is provided, comprising: expanding the pull-out table by translating a primary table from a first position, in which a secondary table is stowed, to a second position in which the secondary table is deployed from the primary table.

Optionally, the method comprises: collapsing the pull-out table by translating the primary table from the second position, in which the secondary table is deployed from the primary table, to the first position in which the secondary table is stowed.

The method may comprise using and/or providing the expanding pull-out table as described herein with reference to the first aspect of the invention, the aircraft galley as described herein with reference to the second aspect of the invention, and/or the aircraft as described herein with reference to the third aspect of the invention.

According to another aspect of the invention, there is provided an expanding table configured to expand upon being withdrawn from a recess. The table may expand only after first moving a predetermined distance without expanding. Thus, the expanding table may only expand once it is pulled far enough out of the recess. The expanding table may comprise any of the features of the expanding pull-out table as described herein with reference to any of the other aspects of the invention.

Certain preferred embodiments of the present invention will now be described in greater detail, by way of example only and with reference to the following figures, in which:
Figure 1 shows an aircraft galley;
Figure 2 shows an aircraft galley in a hazardous condition;
Figure 3 shows a schematic drawing of an expanding pull-out table for an aircraft galley in a stowed configuration;
Figure 4 shows a schematic drawing of the expanding pull-out table in an intermediate configuration;
Figure 5 shows a schematic drawing of the expanding pull-out table in a deployed configuration;
Figure 6 shows a perspective view of the expanding pull-out table in the deployed configuration;
Figure 7 shows a schematic drawing of the expanding pull-out table being returned from the deployed configuration to the intermediate configuration;
Figure 8 shows a schematic drawing of the expanding pull-out table being returned from the intermediate configuration to the stowed configuration;
Figure 9 shows a schematic drawing of the expanding pull-out table in an intermediate configuration in greater detail;
Figure 10 shows a schematic drawing of the expanding pull-out table in a deployed configuration;
Figure 11 shows a damper wheel; and
Figure 12 shows a work station of an aircraft galley with two expanding pull-out tables deployed.

As described herein, according to a first aspect of the invention, there is provided an expanding pull-out table for an aircraft galley, comprising: a primary table; and a secondary table actuable relative to the primary table; wherein the expanding pull-out table is reconfigurable, by translation of the primary table, between a first configuration in which the secondary table is stowed, and a second configuration in which the secondary table is deployed from the primary table.

Thus, the expanding pull-out table is configured so that the secondary table is deployed from the primary table by movement of the primary table e.g. relative to a work surface and/or a recess of an aircraft galley. The secondary table is therefore deployed from the primary table by pulling out the expanding pull-out table e.g. out of a recess of the aircraft galley, and hence the process of expanding the expanding pull-out table is simple, intuitive, reliable and safe. When the secondary table is stowed the expanding pull-out table is made more compact thereby and hence the expanding pull-out table can, for example be stowed within a work surface of the aircraft galley.

In the first configuration the secondary table may be stowed within the footprint of the primary table. In the first configuration the secondary table may be stowed within the primary table, for example within an internal cavity of the primary table. In the first configuration the secondary table may be stowed in an overlapping arrangement with the primary table. The secondary table may therefore be housed by the primary table when in the first configuration. The overall size of the expanding pull-out table in the first configuration may therefore be determined by the size of the primary table. When the second table is stowed, it may be unavailable for placing items thereupon by virtue of being stowed.

The primary table may be a single, unitary element, and may be monolithic. It may therefore have a fixed size. The secondary table may also be a single, unitary element, and may be monolithic and have a fixed size.

In the second configuration the expanding pull-out table has a larger surface (and overall footprint) for placing things on when deployed. The expanding pull-out table has a smaller surface and footprint in its first configuration, and therefore takes up less space when stowed.

In the second configuration the expanding pull-out table provides an extended table surface for placing items on. In the second configuration the expanding pull-out table may provide an extended table surface for placing items on that are larger than the primary pull-out table.

In the second configuration the primary pull-out table and secondary pull out table may provide a continuous (or substantially continuous) surface. In the second configuration the primary table and secondary table may provide a contiguous surface. In the second configuration an upper surface of both the primary table and the secondary table may provide a work surface. In the second configuration the surface area of the work surface may be 30%, 40%, or 50% greater than the upper surface area provided by the primary table alone. The additional surface area provided by the secondary table may be predetermined and selected dependent on the available space and demands in the intended work area. In other words and as examples, the secondary table may be configured to provide a 30% increase in work surface for a galley of relatively small size, or the secondary table may be configured to provide a 50% increase in work surface for a galley of relatively large size.

The expanding pull-out table may be sized to be installed within the recess of an aircraft galley in the first configuration. The expanding pull-out table may be sized to be installed within a standard recess size of an aircraft galley in the first configuration. Advantageously the expanding pull-out table may be used to upgrade existing aircraft structures with a table that provides a larger working area, since it may be retrofit to existing recesses. Thus, in its first configuration the expanding pull-out table has the same overall size envelope as the primary table, while in its second configuration it has an overall size envelope greater than that of the primary table.

The expanding pull-out table may be configured to be operable and/or installable either way up. Advantageously the secondary table may deploy in either direction as needed by orientation of the same expanding-pull out table. The expanding pull-out table may be symmetrical either side of a plane parallel to the upper surface of the primary table. For example, the plane may be located at the centre of the depth of the primary table. Advantageously the expanding pull-out table may be installed either way up such that, for example, the same expanding pull-out table may be used for either left or right deployment extension of the secondary table. Alternatively, the expanding pull-out table may have a preferred orientation and may comprise e.g. a recess, or a raised lip, on one or more upper surface for more securely retaining items placed thereupon.

The primary table may be configured to translate e.g. back and fore in only a single direction e.g. along a first axis. The secondary table may be configured to translate relative to the primary table. The secondary table may be configured to translate in the direction of the first axis and in the direction of a second axis relative to the primary table. In this manner, the secondary table may translate with the primary table and, at the same time as translating with the primary table (or after translating a certain distance with the primary table), translate in a second direction relative to the primary table. The secondary table may be configured to translate within a plane of the primary table. The second axis may be at an angle to the first axis. The second axis may be perpendicular to the first axis. The secondary table may be carried with the primary table and not move relative thereto, at least for a portion of the travel of the primary table. The secondary table may be configured to move relative to the primary table, at least for a portion of the travel of the primary table.

In the first configuration the expanding pull-out table may be configured such that its footprint is equivalent to a non-expanding pull-out table, or to the primary table. Advantageously, the expanding pull-out table may be retrofitted to aircraft galleys in place of non-expanding pull-out tables whilst providing a greater working surface when in the second configuration. In the first configuration the secondary table may be stowed above or below the primary table. In the first configuration the secondary table may be stowed within an upper, lower or internal recess of the primary table. In the first configuration the secondary table may be stowed within the primary table by being housed within an internal cavity of the primary table. The internal cavity and secondary table may be configured such that in the stowed configuration the secondary table does not protrude from the primary table. In the first configuration the secondary table may be stowed within the primary table by being arranged within an upper or lower recess of the primary table.

Deployment of the secondary table may be proportional to translation of the primary table. For example, translation of the primary table may cause translation of the secondary table by a proportional (e.g. linearly proportional) amount. Thus, the more the primary table is moved, the more the secondary table may be deployed therefrom. The secondary table may be at a fully deployed position when the primary table is at a fully extended position. The secondary table may be at a partially deployed position when the primary table is at a partially extended position.

The expanding pull-out table may comprise a deployment mechanism configured to translate the secondary table relative to the primary table (e.g. in the direction of the second axis) proportional to translation of the primary table (e.g. along the first axis).

The deployment mechanism may be configured to extend and retract the secondary table based on translation of the primary table such that when the expanding pull-out table is operated it may automatically extend the secondary table when required. For example, the deployment mechanism may be configured such that, in use, the deployment mechanism extends the secondary table as the primary table is pulled out of the recess of the aircraft galley and retracts the secondary table as the primary table is pushed back into the recess of the galley. Advantageously, the deployment mechanism may be configured to deploy the secondary table in a manner that it is not blocked by or interfere with the galley structure.

The deployment mechanism may be configured to translate the secondary table a distance in the direction of the second axis proportional (e.g. linearly proportional) to the distance the primary table translates along the first axis.

The deployment mechanism may be configured to translate the secondary table in a first direction of the second axis if the primary-pull out table translates in a first direction along the first axis. The deployment mechanism may be configured to translate the secondary table in a second direction of the second axis if the primary table translates in a second direction along the first axis. The deployment mechanism may therefore be configured to deploy and retract the secondary table relative to the primary table, based on movement of the primary table.

The deployment mechanism may be configured to translate the secondary table in the direction of the second axis responsive to the primary table translating a predetermined distance along the first axis. Thus, the secondary table may not move relative to the primary table for a portion (e.g. an initial portion) of the travel of the primary table as it is withdrawn from a recess if a work station. Instead, the secondary table may start to deploy only after the primary table has moved the predetermined distance.

Thus, in use, the expanding pull-out table may be configured such that the secondary table only begins translating relative to the primary table once it has cleared the galley structure. The deployment mechanism may be configured such that it does not translate the secondary table relative to the primary table until the primary table has translated a predetermined distance along the first axis so that the secondary table is clear to deploy. The deployment mechanism may therefore be configured so that the secondary table does not move relative to the primary table until the primary table has moved by more than the predetermined distance. The deployment mechanism may therefore be configured so that the secondary table starts to move relative to the primary table only after the primary table has moved by at least the predetermined distance.

The deployment mechanism may comprise a rack and pinion assembly arranged to deploy (and retract) the secondary table by an amount proportional to translation of the primary table beyond the predetermined distance.

Advantageously a rack and pinion assembly provides a simple, reliable deployment mechanism that is configurable to engage once the primary table has moved at least the predetermined distance.

The rack and pinion assembly may comprise a primary rack and a secondary rack.

The primary rack may be configured to translate the predetermined distance along the first axis, and may be configured to translate only the predetermined distance. The primary rack may not drive movement of the secondary table until it has travelled the predetermined distance. The primary rack may be configured to translate the predetermined distance and then stop such that the other components of the rack and pinion assembly can only then be driven relative to the (temporarily) stationary primary rack.

The secondary rack may be coupled to the secondary table, and may be fixed relative thereto. The secondary rack may be arranged to translate the secondary table relative to the primary table as described herein. The secondary rack may be arranged perpendicular to the primary rack. The secondary rack may be configured to translate in the direction of the second axis.

The pinion assembly may be arranged in mechanical engagement with the primary rack and the secondary rack. The pinion assembly may be arranged such that once the primary rack is stationary (e.g. after translating the predetermined distance), continued translation of the primary table actuates the secondary rack thereby translating the secondary table. The primary rack may be configured to become stationary in response to translating the predetermined distance.

The pinion assembly may comprise a first and second gear, the first gear may be driven by the primary rack and the second gear may drive/be driven by the secondary rack. The first gear may be arranged to mesh with the primary rack and the second gear may be arranged to mesh with the secondary rack. The first and second gears may be configured to rotate as one e.g. not move relative to each other. The first and second gears may be arranged on the same shaft. Rotation of the first gear may rotate the second gear (e.g. by the same amount) and rotation of the second gear may rotate the first gear (e.g. by the same amount). The first and second gears may be concentric.

The first and second gears may be arranged to translate the secondary table relative to the primary table at a greater rate than translation of the primary table. The first gear may have a smaller diameter than the second gear. The first gear having a smaller diameter than the second gear may cause the secondary table to translate in the direction of the second axis at a rate greater than the primary table translates along the first axis. The first and second gears may therefore be different sizes so that they move relatively to the primary and secondary racks at different rates to each other. Thus, relative movement of the first gear to the primary rack by a first distance may move the secondary rack (and hence the secondary table) by an amount greater than the first distance.

The first and second gears may have a fixed position relative to the primary table, and may be rotatable relative thereto. The first and second gears may be mounted to the primary table. The deployment mechanism may be configured such that after movement of the primary table by the predetermined distance, the primary rack stops moving while the primary table keeps moving. Thus, the first and second gears may be moved relative to the primary rack, and rotation of the first gear along the primary rack rotates the secondary gear, which translates the secondary table in the direction of the second axis via the secondary rack.

The expanding pull-out table may comprise a translation limiter located at a position along the primary rack and configured to engage a slider housing to prevent translation of the primary rack beyond a predetermined position along the first axis. The translation limiter may be an integral protrusion of the primary rack. The translation limiter may be a separate component attached to the primary rack. The translation limiter may therefore stop movement of the primary rack with the primary table after it has travelled the predetermined distance.

The deployment mechanism may be configured to retract the secondary table to reconfigure the expanding pull-out table from the second configuration to the first configuration proportional (e.g. linearly proportional) to translation of the primary table along the first axis. The secondary table may therefore be stowed by moving the primary table to a stored position.

Advantageously, the expanding pull-out table, and specifically the deployment and stowing of the secondary table, can be done automatically by translation of the primary table. For example, it is not required to directly push the secondary table into the stowed position.

The deployment mechanism may be configured to hold the primary rack stationary for the first and second gears to move along for retracting the secondary table. The deployment mechanism may comprise a ball-lock mechanism. The ball-lock mechanism may be configured to provide resistance to translation of the primary rack. The ball-lock mechanism may provide resistance to translation of the primary rack in one direction along the first axis. The ball-lock mechanism may be configured to provide temporary resistance to translation of the primary rack. The ball-lock mechanism may be configured to releasably engage a slider housing to prevent translation of the primary rack along the first axis. The ball-lock mechanism may be configured to prevent translation of the primary rack along the first axis in a direction opposite to the direction of translation that the translation limiter prevents.

The deployment mechanism may comprise a push rod. The push rod may be arranged to engage and disengage the ball-lock mechanism based on the position of the primary table. The push rod may provide a simple and reliable means of automatically engaging and disengaging the ball-lock mechanism in response to the position of the primary table. The push rod may be attached to the primary table and may translate with the primary table. The push rod may be arranged within a hollow passageway of the primary rack .

The deployment mechanism may comprise a spring trigger mechanism. The spring trigger mechanism may be configured to deploy the ball-lock mechanism. The spring trigger mechanism may provide a simple and reliable means of automatically engaging and disengaging the ball-lock mechanism in response to the position of the primary table.

The push rod, spring trigger mechanism and ball-lock mechanism may be arranged such that in the event the expanding pull-out table is being reconfigured from the deployed configuration toward the stowed configuration, the primary rack is prevented from translating for predetermined positions of the primary table. The primary rack may therefore be held in place so that secondary table is retracted when the primary table is pushed towards its stowed position.

The push rod, spring trigger mechanism and ball-lock mechanism may be arranged such that translation of the primary table in a first direction causes the push rod to release the spring trigger mechanism which deploys the ball-lock mechanism. The push rod, spring trigger mechanism and ball-lock mechanism may be arranged such that translation of the primary table in a second direction causes the push rod to engage the spring trigger mechanism which releases the ball-lock mechanism.

The deployment mechanism, and more specifically the arrangement of the push rod, spring trigger mechanism and ball-lock mechanism, may therefore temporarily prevent the primary rack from translating along the first axis in the event that the expanding pull-out table is translated from the second configuration towards the first configuration. The temporary resistance that may be provided may temporarily hold the primary rack fixed such that in the event that the expanding pull-out table is translated from the second configuration toward the first configuration (e.g. pushed to be stowed away), the pinion assembly may drive the secondary rack to withdraw the secondary table into the stowed configuration.

The expanding pull-out table may comprise a damper wheel configured to dampen vibrations of the primary table and secondary table. The damper wheel may also be configured to transport the expanding pull-out table between positions of the first and second configurations.

Advantageously, the damper wheel may dampen vibrations acting on the expanding pull-out table caused by factors such as turbulence and others modes of flight such as take-off and landing, which generate vibration to the airframe of the aircraft. The damper wheels may advantageously reduce the mechanical resistance to reconfiguring the expanding pull-out table between the first configuration and second configuration. The damper wheels may decrease the wear on the components of the expanding pull-out table.

The damper wheel may be arranged to dampen vibration of the primary table and secondary table e.g. when the expanding pull-out table is in the second configuration, which in use is when it extends from a work station.

The expanding pull-out table may comprise two damper wheels. The expanding pull-out table may comprise a plurality of damper wheels.

The damper wheel(s) may protrude from both an upper and lower surface of the primary table, and may thereby be arranged to prevent the transmission of vibrations to the primary and secondary tables. For example, the damper wheel(s) may serve to securely locate the primary table within a recess of a work station and help reduce vertical movement of the primary table e.g. by contact with surfaces of the recess.

The damper wheel(s) may be housed within the primary table and portions of the damper wheel may protrude through openings in upper and lower surfaces of the primary table.

Two damper wheel(s) may protrude through respective openings in upper and lower surfaces of the primary table. A plurality of damper wheels may protrude through a plurality of respective openings in upper and lower surfaces of the primary table.

The damper wheel(s) may be at least partially formed of a rubber material.

The damper wheels being formed of rubber material may advantageously increase the damping effect provided.

The damper wheel(s) may comprise a through hole spaced from the rotational axis for dampening.

The damper wheel(s) may comprise a plurality of holes for shock-absorbing and hence dampening. The hole(s) may advantageously increase the damping effect provided. The hole(s) may be radially offset from a centre of rotation of the damper wheel(s). The hole(s) may be formed in a rubber portion of the damper wheel.

The expanding pull-out table may comprise a plurality of damper wheels.

According to a second aspect of the invention an aircraft galley is provided comprising the expanding pull-out table of the first aspect of the invention, optionally including any of the optional features recited in respect of the first aspect.

The aircraft galley may comprise a work station having a recess, wherein the expanding pull-out table is installed in the recess such that in a first configuration the expanding pull-out table is housed within the recess and in a second configuration the expanding pull-out table protrudes from the recess.

In the second configuration the expanding pull-out table may provide a working surface that is of greater width than the recess. The expanding pull-out table may be configured such that the secondary table does not interfere with the recess during reconfiguration of the expanding pull-out table, e.g. between the first and second configurations. The second table may only deploy once it is clear of the recess and may be fully retracted before it enters the recess. The first configuration may be a stowed configuration and the second configuration may be a deployed configuration.

The recess may be a first recess and the expanding pull-out table may be a first expanding pull-out table; the work station may comprise a second recess; the aircraft galley may comprise a second expanding pull-out table of the first aspect, optionally including any of the optional features of the first aspect, installed in the second recess, and the first and second expanding pull-out tables may be arranged such that the respective secondary tables extend in opposite directions.

The first and second expanding pull-out tables may be arranged such that the respective secondary tables each extend in a direction away from the first and second expanding pull-out tables. The first and second expanding pull-out tables may be arranged such that the respective secondary tables each extend in a direction towards the first and second expanding pull-out tables. The secondary tables may be configured to extend towards one another or away from each other. In the event that the secondary tables extend towards one another the expanding pull-out tables may effectively provide a continuous or near continuous working surface for the placement of large items that may not otherwise be possible. In the event that the secondary tables extend away from one another it may be possible for crew to stand between the expanding pull-out tables for access to other equipment or surfaces in the galley.

The aircraft galley may comprise a crate. The galley may comprise a shelf or racking for receiving the crate. The crate may be a predetermined size and configured to be retained by the racking of the galley. The crate may be a standard size in the industry. The expanding pull-out table may be large enough in its second configuration to support the crate thereupon. The expanding pull-out table may be sized so that footprint of the crate is larger than the footprint of the primary table. Alternatively, the primary table may be large enough to support the crate and may have a footprint larger than the crate. Thus, in the second configuration the expanding pull-out table may support a crate on the primary table, and be large enough to support other items on the secondary table.

According to a third aspect of the invention there is provided an aircraft comprising the expanding pull-out table according to the first aspect of the invention, optionally including any of the optional features of the first aspect, and/or the aircraft galley according to the second aspect of the invention, optionally including any of the option features of the second aspect.

According to a fourth aspect of the invention a method of reconfiguring an expanding pull-out table for an aircraft galley is provided, comprising: expanding the pull-out table by translating a primary table from a first position, in which a secondary table is stowed, to a second position in which the secondary table is deployed from the primary table.

Expanding the expanding pull out table may comprise pulling the primary table in a single direction.

The method may comprise collapsing the pull-out table by translating the primary table from the second position, in which the secondary table is deployed from the primary table, to the first position in which the secondary table is stowed.

Collapsing the expanding pull-out table may comprise pushing the primary table in a single direction. The direction in which the primary table is pushed or pulled for expanding and collapsing the expanding pull-out table may be the opposite of one another.

Expanding and/or collapsing the expanding pull-out table may comprise translating the secondary table in a direction different to that of the primary table e.g. in a direction substantially perpendicular.

The following is a detailed description of an expanding pull-out table according to the disclosure with reference to the figures.

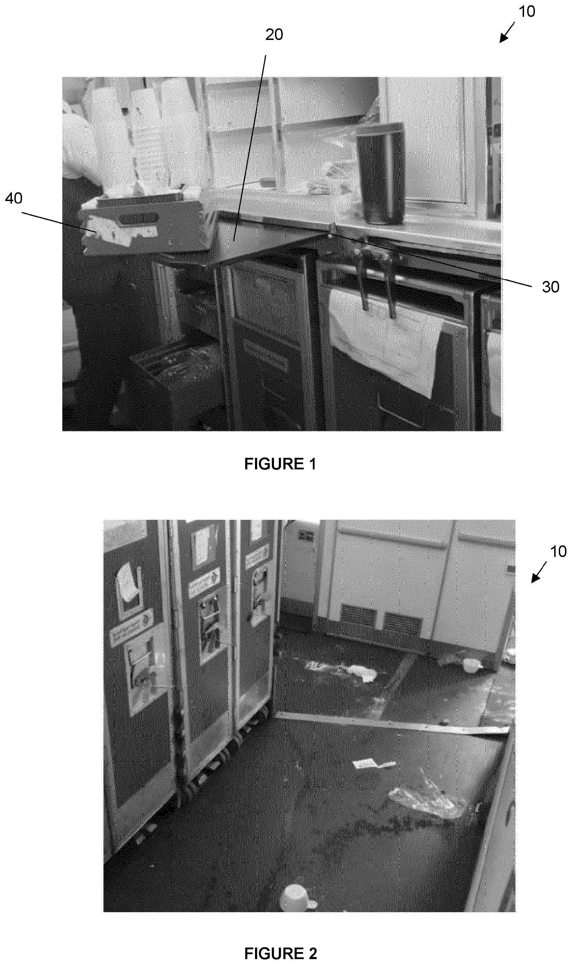

Figure 1 shows an aircraft galley 10 having a galley table 20 extended from a recess 30 in the structure of the galley 10. Improperly positioned on the galley table 20 is a crate 40 for food and beverage products. Figure 2 shows the floor of the aircraft galley 10 with food and beverage products that have fallen from the galley table 20 due to improper positioning of the crate(s) 40 and/or turbulence or other vibrations.

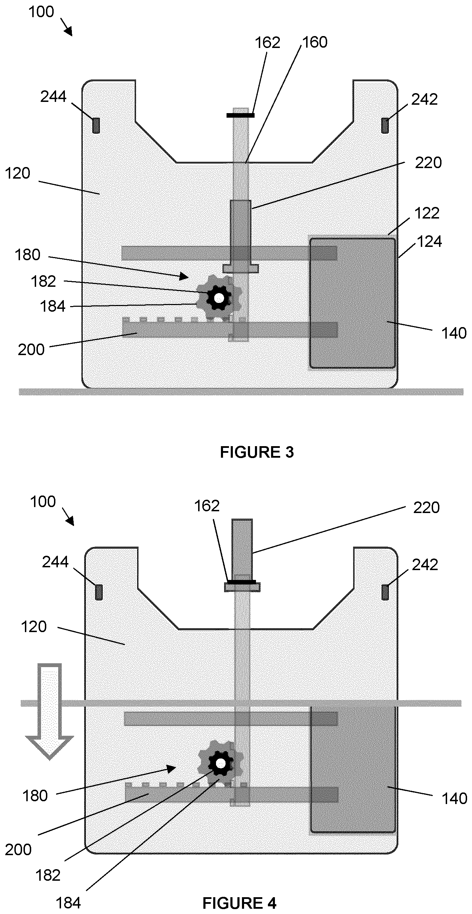

Figure 3 shows an expanding pull-out table 100 for an aircraft galley 10. An aircraft galley 10 is a section of an aircraft in which food and beverages are typically prepared in-flight. They are typically as small as possible for space efficiency. The expanding pull-out table 100 is configured such that it can be pulled out of a suitable recess 30 in the galley 10 when additional workspace is required, e.g. for placing food and beverages upon, and can be pushed back into the recess 30 such that it does not occupy the limited available space in the galley 10 when not required.

The expanding pull-out table 100 comprises a primary table 120 and a secondary table 140. The primary table 120 has an internal cavity 122 and an opening 124. The internal cavity 122 is sized to house the secondary table 140. The opening 124 is sized such that the secondary table 140 can move from within the internal cavity 122 to the exterior of the primary table 120, and back again.

With this arrangement, not only can the expanding pull-out table 100 be pulled out of or pushed into a suitable recess 30 in the galley 10 along a first axis (see e.g. the arrow in Fig. 4), but the width of the total working space the expanding pull-out table 100 provides can be greater than the width of said recess 30. This is because, in a stowed configuration, e.g. with the expanding pull-out table 100 located in a recess 30 of the galley 10, the secondary table 140 can be housed within the primary table 120, and in a deployed configuration, e.g. with the expanding pull-out table 100 pulled out from the recess, the secondary table 140 can extend from the primary table 120, in the direction of a second axis (e.g. perpendicular to the first axis) relative to the primary table 120, thereby increasing the work surface available. The expanding pull-out table 100 is therefore wider in its deployed configuration than the recess 30, and narrow enough in its stowed configuration to fit within the recess 30. The mechanisms and operation thereof that enable the extension and withdrawal of the secondary table 140 in the direction of the second axis, e.g. out of and into the primary table 120, whilst the expanding pull-out table 100 as a whole translates along the first axis, is described in more detail as follows.

The expanding pull-out table 100 comprises a primary rack 160, a pinion assembly 180 and a secondary rack 200 arranged perpendicular to the primary rack 160 and coupled to the secondary table 140. Each of the primary rack 160, the pinion assembly 180 and the secondary rack 200 are arranged to translate with the primary table 120 along the first axis. The primary rack 160 is arranged to translate through a slider housing 220 that is fixed relative to the expanding pull-out table 100. For example, the slider housing 220 may be attached to an inner portion of the recess 30 in the galley 10.

The pinion assembly 180 comprises a first gear 182 and a second gear 184 that are concentric and are coupled such that rotation of one rotates the other e.g. by the same amount. The first gear 182 is of smaller diameter than the second gear 184. The first gear 182 is arranged to mesh with the primary rack 160. The second gear 184 is arranged to mesh with the secondary rack 200.

In the event that the expanding pull-out table 100 is translated along the first axis, e.g. pulled from the stowed configuration shown in Figure 3, the primary table 120, the secondary table 140, the primary rack 160, the pinion assembly 180, and the secondary rack 200 all translate together until an intermediary position as depicted in Figure 4 is reached.

Figure 4 shows the expanding pull-out table 100 in the intermediary position between the stowed configuration and the deployed configuration. At this position, a translation limiter 162 of the primary rack 160 engages the slider housing 220 which prevents further translation of the primary rack along the first axis. Also at this position, the secondary table 140 is clear of the recess 30.

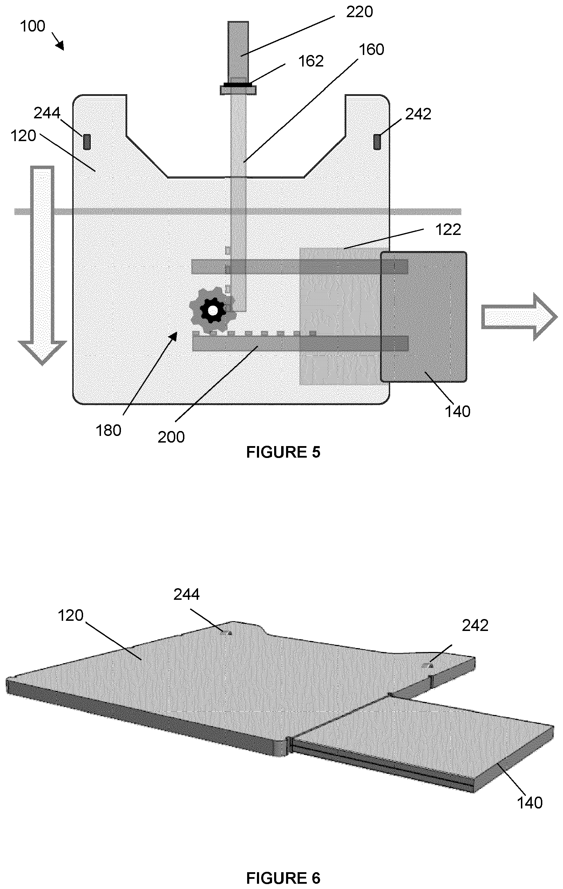

As shown in Figure 5, in the event of continued translation of the expanding pull-out table 100 from the intermediary position shown in Figure 4, the first gear 182 will rotate along the primary rack 160, which is held fixed due to the translation limiter 162 engaging the slider housing 220. Rotation of the first gear 182 will rotate the second gear 184, which will drive the secondary rack 200 in the direction of the second axis and thereby deploy the secondary table 140 from within the primary table 120.

The primary rack 160, the slider housing 220 and the translation limiter 162 can therefore be arranged such that the secondary table 140 only begins deploying from the primary table 120 when the opening 124 is clear of the galley recess 30.

Figure 6 shows a perspective view of the expanding pull-out table 100 in the deployed configuration.

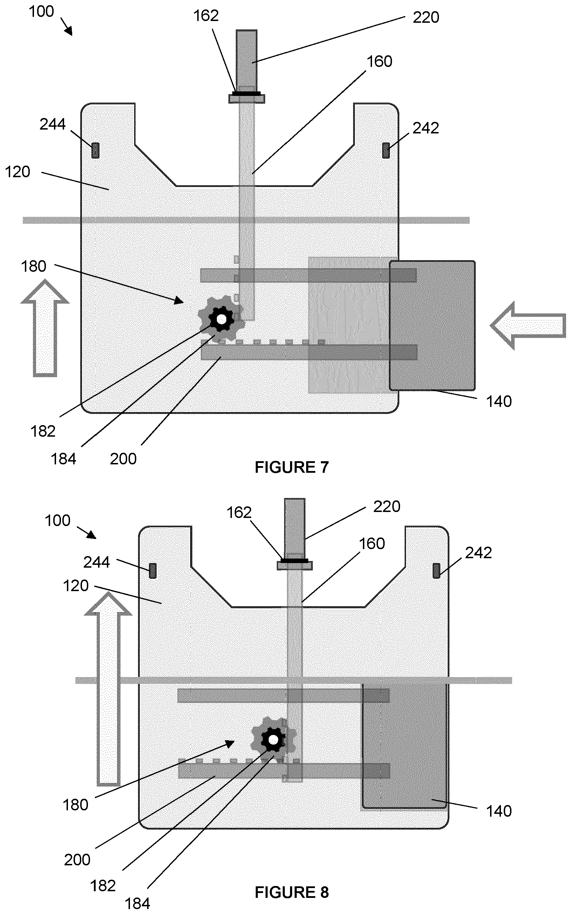

As shown in Figures 7 and 8, in the event that the expanding pull-out table 100 is translated along the first axis in a reverse direction to that of Figures 4 and 5, e.g. pushed to stow the expanding pull-out table 100, the secondary table 140 is withdrawn from the deployed configuration to the stowed configuration. It is therefore not necessary to directly apply force to the secondary table 140 in order to change its position relative to the primary table 120. Instead, it is only necessary to apply force to the primary table, which indirectly moves the secondary table 140 by virtue of the deployment mechanism.

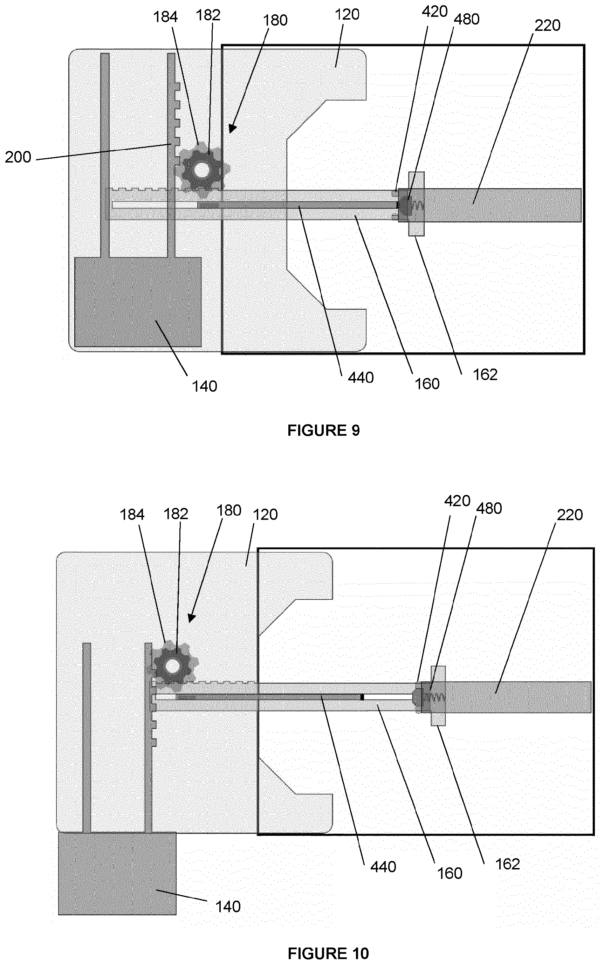

Figures 9 and 10 show in more detail the mechanisms that contribute to the withdrawal of the secondary table 140.

Figure 9 shows the expanding pull-out table 100 in the intermediary position previously described in relation to Figure 4. That is, the position in which translation limiter 162 of the primary rack 160 engages the slider housing 220, which prevents further translation of the primary rack 160 along the first axis when translating from the stowed configuration to the deployed configuration. As shown in Figure 9, the expanding pull-out table 100 comprises a ball-lock mechanism 420, a push rod 440, and a spring trigger mechanism 480.

The purpose of the ball-lock mechanism 420 is to temporarily prevent the primary rack 160 from translating along the first axis in the event that the expanding pull-out table 100 is translated from the deployed configuration shown in Figures 5, 6 and 7 to the intermediary position shown in Figure 8. The temporary resistance provided temporarily holds the first rack 160 fixed such that in the event that the expanding pull-out table 100 is translated from the deployed configuration to the intermediary position, the first gear 182 will rotate along the stationary primary rack 160. Rotation of the first gear 182 will rotate the second gear 184, which will drive the secondary rack 200 in the direction of the second axis and thereby withdraw the secondary table 140 into the primary table 120.

The push rod 440 is located within a hollow passageway 442 of the first rack 160. The push rod 440 is attached to the primary table 120 and translates with the primary table 120.

In the position shown in Figure 9, the push rod 440 is in abutment with the spring trigger mechanism 480 and holds it back from the ball-lock mechanism 420. In other words, the ball-lock mechanism 420 is disengaged and does not protrude outward from the primary rack. In the event that the expanding pull-out table 100 is translated along the first axis towards the deployed configuration, e.g. from Figure 9 to Figure 10, the push rod 440 translates with the primary table 100 and thereby releases the spring trigger mechanism 480 as it is no longer in abutment.

In the event that the expanding pull-out table 100 is translated back along the first axis, back towards the stowed configuration, e.g. from Figure 10 to Figure 9 (or eventually Figure 3), the push rod 440 will be forced back into abutment with the spring trigger mechanism 480 and will push it back away from the ball-lock mechanism 420, thereby disengaging the ball-lock mechanism 420 as shown in Figure 9. In the event that the ball-lock mechanism 420 is disengaged, the primary rack 160 is free to translate with the primary table 120 back towards the stowed configuration.

Figure 10 shows the arrangement of the ball-lock mechanism 420, the push rod 440, and the spring trigger mechanism 480 when the expanding pull out-table 100 is in the deployed configuration.

As shown in Figure 10, the spring trigger mechanism 480 is configured such that, in the event it is released by the push rod 440, it causes ball-lock mechanism 420 to protrude from the primary rack 160. This is achieved by a wedge portion of the spring trigger mechanism 480 pushing balls of the ball-lock mechanism outward from the primary rack 160. The ball-lock mechanism 420 in this position is in abutment with both the primary rack 160 and the slider housing 220 and hence prevents the primary rack 160 from translating along the first axis in the event that the expanding pull-out table 100 is translated from the deployed configuration shown in Figure 10 back to the intermediary position shown in Figure 9.

As shown in the Figures, the expanding pull-out table 100 comprises a set of damper wheels 240, i.e. a first damper wheel 242 and a second damper wheel 244 attached to the primary table 120. The damper wheels 240 have a diameter greater than the depth of the primary table 120 such that the damper wheels 240 protrude from upper and lower openings of the primary table 120.

The damper wheels 240 therefore allow the expanding pull-out table 100 to roll into and out of the recess 30 in the galley 10 when in use and hence reduces the resistance to translation of the expanding pull-out table 100 along the first axis and reduces wear of the components of the expanding pull-out table 100.

The set of damper wheels 240 also dampen vibrations the expanding pull-out table 100 is subjected to from the galley 10 and aircraft, for example from turbulence, engine vibrations, other appliances in the galley 10 and the like. This is achieved by the damper wheels 240 contacting internal surfaces of the galley recess 30 when subjected to vibration and being of a dampening material and/or construction such that the damper wheels 240 can effectively absorb the vibrations. This again reduces wear of the components of the expanding pull-out table 100 but also provides a stable working surface when the expanding pull-out table 100 is in the deployed configuration.

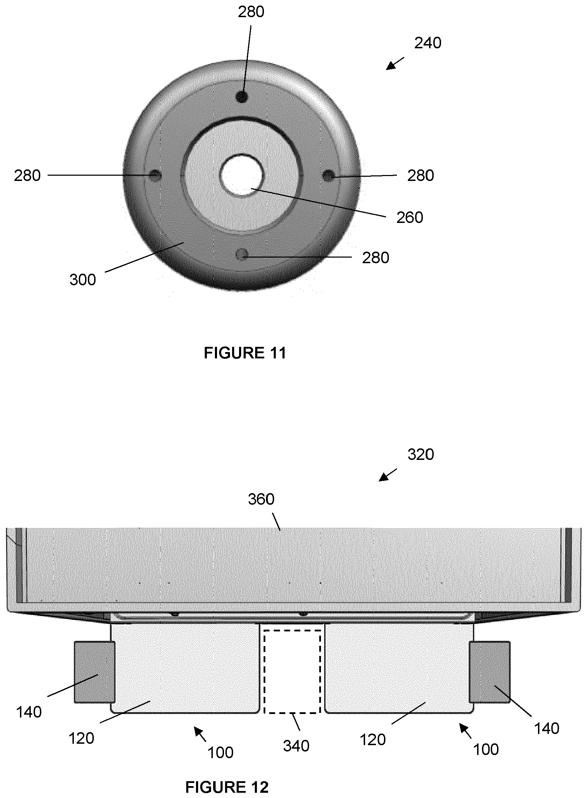

Figure 11 shows a damper wheel 240 in more detail. The damper wheel 240 has a central aperture 260 for being rotatable mounted the expanding pull-out table 100. The damper wheel 240 comprises holes 280 for dampening vibrations subjected to the damper wheel 240. Damper wheel 240 has rubber body 300 for dampening vibrations.

Figure 12 shows a workstation 320 of an aircraft galley 10. The workstation 320 has two expanding pull-out tables 100 installed therein. The expanding pull-out tables 100 are arranged in opposing configurations such that the secondary table 140 of each expanding pull-out table 100 deploys away from one another and towards a periphery of the workstation 320. With this arrangement, the working surface that can be provided by the expanding pull-out tables 100 is maximised whilst also leaving a region 340 between the two expanding pull-out tables 100 that permit crew to stand or reach therebetween to access a fixed worksurface 360 of the galley 10.

## Claims

1. An expanding pull-out table for an aircraft galley, comprising:
a primary table; and
a secondary table actuable relative to the primary table; wherein
the expanding pull-out table is reconfigurable, by translation of the primary table, between a first configuration in which the secondary table is stowed, and a second configuration in which the secondary table is deployed from the primary table.

2. The expanding pull-out table of claim 1, wherein the expanding pull-out table is translatable along a first axis and comprises a deployment mechanism configured to translate the secondary table in the direction of a second axis proportional to translation of the primary table along the first axis.

3. The expanding pull-out table of claim 2, wherein the deployment mechanism is configured to translate the secondary table in the direction of the second axis responsive to the primary table translating a predetermined distance along the first axis.

4. The expanding pull-out table of claim 2 or 3, wherein the deployment mechanism comprises a rack and pinion assembly arranged to deploy the secondary table by an amount proportional to translation of the primary table.

5. The expanding pull-out table according to any of claims 2 to 4, wherein the deployment mechanism is configured to retract the secondary table to reconfigure the expanding pull-out table from the second configuration to the first configuration proportional to translation of the primary table along the first axis.

6. The expanding pull-out table of any preceding claim, comprising a damper wheel configured to dampen vibrations of the primary table and secondary table.

7. The expanding pull-out table of claim 6, wherein the damper wheel is housed within the primary table and portions of the damper wheel protrude through openings in upper and lower surfaces of the primary table.

8. The expanding pull-out table of claims 6 or 7, wherein
the damper wheel is at least partially formed of a rubber material.

9. The expanding pull-out table of claims 6, 7, or 8, wherein
the damper wheel comprises a through hole spaced from the rotational axis for dampening.

10. An aircraft galley comprising the expanding pull-out table of any preceding claim.

11. The aircraft galley of claim 10, comprising
a work station having a recess, wherein
the expanding pull-out table is installed in the recess such that in a first configuration the expanding pull-out table is housed within the recess and in a second configuration the expanding pull-out table protrudes from the recess.

12. The aircraft galley of claim 11, wherein:
the recess is a first recess and the expanding pull-out table is a first expanding pull-out table;
the work station comprises a second recess;
the aircraft galley comprises a second expanding pull-out table according to any of claims 1 to 9 installed in the second recess, and
the first and second expanding pull-out tables are arranged such that the respective secondary tables extend in opposite directions.

13. An aircraft comprising the expanding pull-out table according to claims 1 to 9 and/or the aircraft galley according to claims 10 to 12.

14. A method of reconfiguring an expanding pull-out table of an aircraft galley, comprising:
expanding the pull-out table by translating a primary table from a first position, in which a secondary table is stowed, to a second position in which the secondary table is deployed from the primary table.

15. The method according to claim 14, comprising:
collapsing the pull-out table by translating the primary table from the second position, in which the secondary table is deployed from the primary table, to the first position in which the secondary table is stowed.
